# EUROPEAN PATENT SPECIFICATION

(11) **EP 4 567 480 B1**
(45) Date of publication and mention of the grant of the patent: **28.10.2026**
(21) Application number: 23859360.2
(22) Date of filing: 29.08.2023
(51) Int. Cl.: G02B 6/12, G02B 6/125

(54) **OPTICAL SPLITTER, OPTICAL SPLITTER CHIP, COMMUNICATION DEVICE, AND OPTICAL DISTRIBUTION NETWORK**
OPTISCHER SPLITTER, OPTISCHER SPLITTERCHIP, KOMMUNIKATIONSVORRICHTUNG UND OPTISCHES VERTEILUNGSNETZWERK
DIVISEUR OPTIQUE, PUCE DE DIVISEUR OPTIQUE, DISPOSITIF DE COMMUNICATION ET RÉSEAU DE DISTRIBUTION OPTIQUE

(30) Priority: 02.09.2022 CN 202211071396
(43) Date of publication of application: 11.06.2025
(73) Proprietor: Huawei Technologies Co., Ltd., Shenzhen, Guangdong 518129 (CN)
(72) Inventor: WEN, Yue, Shenzhen, Guangdong 518129 (CN); QI, Biao, Shenzhen, Guangdong 518129 (CN); LI, Sanxing, Shenzhen, Guangdong 518129 (CN); WANG, Qian, Shenzhen, Guangdong 518129 (CN); WU, Wenpeng, Shenzhen, Guangdong 518129 (CN)
(74) Representative: Goddar, Heinz J.
(86) International application number: PCT/CN2023/115600
(87) International publication number: WO 2024/046331

(56) References cited:
- EP-A1- 3 926 233
- CN-A- 110 794 514
- CN-A- 114 594 554
- CN-U- 219 122 452
- CN-Y- 201 177 670
- JP-A- 2000 231 026
- JP-A- 2005 189 385
- JP-A- 2006 293 171
- JP-A- 2006 317 545
- JP-A- 2006 323 019
- JP-A- 2017 116 862
- KR-A- 20110 012 024
- KR-Y1- 200 363 965
- US-A- 5 524 156
- US-A- 5 923 801
- US-A1- 2004 234 203
- US-A1- 2005 207 702
- US-A1- 2006 067 622
- US-A1- 2007 036 501
- US-B1- 6 404 957

## Description

### TECHNICAL FIELD

This application relates to the field of optical energy loss technologies of an optical splitter, and in particular, to an optical splitter, an optical splitter chip, a communication device, and an optical distribution network.

### BACKGROUND

In the field of optical communication, a splitter is a key component of an optical distribution network (ODN) communication network. In an outdoor pre-connected network scenario, a link loss is large, resulting in a short access distance and low network redundancy. A main reason is that a loss of the optical splitter is large. The loss of the optical splitter mainly includes a waveguide loss (design and process), a coupling loss between a fiber array (FA) and a waveguide, and a connector loss. Key factors for forming the waveguide loss include an optical splitting loss of branching, a waveguide bending loss, and a transmission loss.

A main reason for a branching loss is as follows: Light is transmitted in a straight waveguide in a form of fundamental mode. At a position of branching, a mode field of the fundamental mode is distorted (one branch is divided into a plurality of branches), causing a mode field mismatch and the branching loss. A main reason for the bending loss is as follows: Light is transmitted in a bent waveguide. Because the waveguide is bent, optical mode field distribution is not transmission at a center of a straight waveguide as optical mode field distribution is when light is transmitted in the straight waveguide, but is off-center energy transmission. As a result, an optical splitting ratio changes when subsequent branching continues, and energy distribution consistency of subsequent branching is poor.

Optical splitters are classified into even optical splitting and uneven optical splitting. With a continuous increase of fiber to the home (FTTH) demands, a proportion of uneven optical splitting increases year by year, and demands for reducing an uneven optical splitting loss increase gradually.

CN 110 794 514 A discloses a non-equal-dividing optical divider. The optical divider comprises an input of a single optical waveguide and a 1XN-structure-based output that is formed by at least two branches of the input of the single optical waveguide. The N is a positive integer greater than or equal to 3. The branch of each optical waveguide has a one-to-two structure or a one-to-three structure; and the waveguide widths and the waveguide output angles of the branches of the at least two optical waveguides are different. Meanwhile, the invention also discloses a preparation method of the non-equal-dividing optical divider.

CN 201 177 670 Y discloses a three-branch optical splitter of an excited-mode waveguide structure that relates to a key device in an optical communication system and an optical information processing system. The three-branch optical splitter is composed of a single-mode straight waveguide and an excited-mode waveguide with a mutation interface and is characterized in that the single-mode straight waveguide is a straight tapered waveguide; and two transition tapered waveguides are added behind the excited-mode waveguide with the mutation interface. Accordingly, the output terminal changes from the original two-branch waveguide to the three-branch waveguide, wherein the two bent waveguides on both sides are selected from a cosine bent waveguide, and the intermediate straight waveguide is not added in the transition tapered waveguides, thereby achieving high-uniformity output of the three-branch waveguide. The single-mode straight tapered waveguide, the excited-mode waveguide with the mutation interface, the two transition tapered waveguides and the three-branch waveguide with symmetrical output are sequentially connected in series with each other.

JP 2006 293171 A discloses an optical branching circuit with mutually parallel and linear incident waveguide for guiding light and a plurality of emitting waveguides, arranged with prescribed specific spaces p apart. The route, for guiding light from the incident waveguide to each emission waveguide, is structured with three steps connecting a first, second and third Y-branching waveguides, in the order starting from the incident waveguide end, which forms eight branching circuits. The Y-branching waveguides are each provided with pre-branching linear waveguides before the branching, wherein the waveguide, immediately after the branched part has a curve comprising a circular arc with a prescribed radius of curvature. Also, the first and the third Y-branching waveguides are arranged, with the pre-branching linear waveguides are set parallel with respect to the incident waveguide, while the second Y-branching waveguide is arranged, with the pre-branching linear waveguide inclined with respect to the incident waveguide.

US 5 923 801 A discloses an optical branching element having an input waveguide and a plurality of output waveguides, which are so disposed at a distance from the input waveguide that a beam of light launched into the input waveguide over a coupling path of a predefined length couples over with a defined intensity into the output waveguides.

EP 3 926 233 A1 discloses an optical device comprising: a primary fan-out waveguide; at least one secondary fan-out waveguide; a fan-out optical coupler for coupling a light beam between the primary fan-out waveguide and the secondary fan-out waveguide; and at least one bus waveguide associated with the at least one secondary fan-out waveguide and different from each secondary fan-out waveguide; wherein a reflecting and coupling structure connecting the secondary fan-out waveguide and the bus waveguide.

KR 200 363 965 Y1 discloses a three-branch type optical waveguide including an incident waveguide formed in a rectangular shape so that single-mode incident light is incident, a mode-expanding inclined waveguide having an inlet corresponding to the incident waveguide side to be connected to the incident waveguide side so that single-mode incident light incident through the incident waveguide is expanded and is expanded with an incline in the outer width direction from the inlet toward the exit side, a wavelength-stabilized straight waveguide having an inlet corresponding to the inlet to be connected to the exit of the mode-expanding inclined waveguide so as to stabilize single-mode incident light expanded through the mode-expanding inclined waveguide and having an exit of the same size as the inlet, and a three-branching type branch waveguide that branches the power of light passing through the wavelength-stabilized straight waveguide into three branches at a ratio of 1:2:1.JP 2000 231026 A discloses in a clad on a substrate, a 3-branch part in 3-branch structure which makes an input straight waveguide branch off into two branch curved waveguides and a branch tapered straight waveguide is formed, and this 3-branch part is equipped with a tapered waveguide which is connected to the input straight waveguide and gradually increases in width from the connection side of the input straight waveguide, two trapezoidal waveguides which are connected to the tapered waveguide, separated at a specific interval, and symmetrical and a rectangular waveguide which is arranged between the two trapezoidal waveguides while having a gap W2; and upper-base side of the two trapezoidal waveguides and one long-side side of the rectangular waveguide are connected to the wide-width side of the tapered waveguide and lower-base sides of the two trapezoidal waveguide and the other long-side side of the rectangular waveguide are connected individually to the two branch curved waveguides and branch tapered straight waveguide respectively.

US 2006/067622 A1 discloses an optical branch device, comprising: a branch portion having a first branch waveguide extended linearly and continuously from a waveguide in a basis portion, and second and third branch waveguides extended in the directions farther from the first branch waveguide in such a manner that the first branch waveguide is interposed between the second and third branch waveguides; a parallel portion in which the second and third branch waveguides are positioned in parallel to the first branch waveguide; and a divergent portion in which the second and third branch waveguides are extended gradually farther from the first branch waveguide; wherein the interval pitch P (mum), in the transverse direction, between the first, second and third branch waveguides in the parallel portion and the refractive index difference (Deltan) between the core and the clad are set in such a manner that C satisfies a relationship of C=0.5±0.2 wherein C is calculated by substituting P and Deltan for an equation of C=DeltanxP².

### SUMMARY

This application provides an optical splitter, an optical splitter chip, a communication device, and an optical distribution network. Positions of branch waveguides are distributed, and a first optical splitting waveguide is disposed between second optical splitting waveguides, so that energy optical splitting can be disposed in a low-energy region of an optical signal. This reduces a loss generated during optical splitting of the optical signal. The present invention provides an optical splitter of claim1. Further embodiments are disclosed in the dependent claims. Embodiments of the description not covered by the claims form examples helpful for understanding the invention.

According to a first aspect, this application provides the optical splitter of claim 1. The optical splitter includes an optical input waveguide and an optical splitting waveguide, where the optical input waveguide is configured to receive an optical signal; the optical splitting waveguide includes a first optical splitting waveguide and a plurality of second optical splitting waveguides; the first optical splitting waveguide and the second optical splitting waveguide are coplanar, and the plurality of second optical splitting waveguides are divided into two parts and located on two sides of the first optical splitting waveguide, or the plurality of second optical splitting waveguides are sequentially spaced apart along a circumferential direction of the first optical splitting waveguide; and the first optical splitting waveguide includes a first connection segment connected to the optical input waveguide, and the first connection segment is in a straight-line shape. In this application, the first optical splitting waveguide is disposed between the second optical splitting waveguides, so that an optical splitting line can be effectively disposed in a low-energy region of the optical signal. This effectively reduces a branching loss of optical energy, and can balance sizes of waveguides with different optical energy ratios, to facilitate manufacturing of the optical splitter. In addition, the first optical splitting waveguide is located between the plurality of second optical splitting waveguides, and at least a part of the first optical splitting waveguide is in a straight-line shape, so that an optical signal can be efficiently transmitted, to reduce an energy loss.

In a possible implementation, a cross-sectional area of the first optical splitting waveguide is greater than a cross-sectional area of the second optical splitting waveguide, so that the first optical splitting waveguide has a large energy proportion. In addition, the first optical splitting waveguide is located between the plurality of second optical splitting waveguides, and the optical splitting line of the first optical splitting waveguide and the second optical splitting waveguide is located in the low-energy region. This reduces an energy branching loss.

In the optical splitter according to claim 1, the second optical splitting waveguide includes a second connection segment and a second transmission segment, the second connection segment is located between the first transition waveguide and the second transmission segment, and an optical signal sequentially flows through the second connection segment and the second transmission segment; and both the second connection segment and the second transmission segment are arc-shaped, the second connection segment bends along a transmission direction of the optical signal toward a direction away from the first optical splitting waveguide, and the second transmission segment bends along the transmission direction of the optical signal toward a direction close to the first optical splitting waveguide. The second optical splitting waveguide is of a double-arc-shaped structure, so that there is a specific gap between a light output end of the second optical splitting waveguide and a light output end of the first optical splitting waveguide, to facilitate connection to a back-end fiber and also facilitate cascading with an optical branching element to continue optical splitting.

In a possible implementation, the second connection segment and the second transmission segment are tangent at a bordering position, to ensure that the optical signal is transmitted in a smooth transition waveguide when being transmitted in the second optical splitting waveguide. This prevents an optical energy loss.

In a possible implementation, the second optical splitting segment further includes a third transmission segment, the third transmission segment is located between the second connection segment and the second transmission segment, the third transmission segment is in a straight-line shape, the third transmission segment and the second connection segment are tangent at a bordering position, and the third transmission segment and the second transmission segment are tangent at a bordering position. In this implementation, the third transmission segment is disposed as a straight-line segment, to increase a gap between the second branch waveguide and the first branch waveguide without increasing a length of a bent part in the second optical splitting waveguide, so that a large energy loss caused by a long path that is of a bent waveguide and through which an optical signal passes is avoided.

In the optical splitter according to claim 1, a cross-sectional area of at least a section of the second connection segment smoothly increases along the transmission direction of the optical signal, and a cross-sectional area of at least a section of the second transmission segment smoothly decreases along the transmission direction of the optical signal, to form a second optical splitting waveguide of a thin-thick-thin structure. This can effectively reduce a center deviation that occurs when an optical signal is transmitted in a bent waveguide, and improve balance of back-end optical splitting.

In a possible implementation, the second optical splitting waveguide further includes an optical branching element, the second transmission segment is cascaded with at least one optical branching element at the light output end, and all the second optical splitting waveguides in the optical splitter have N2 waveguide output ports in total, and N2 is an even number greater than or equal to 4. The light output end of the second transmission segment is cascaded with the optical branching element, so that all the second optical splitting waveguides have N2 light output ports, and energy of each light output port is the same.

In a possible implementation, the optical branching element includes a second transition waveguide and a plurality of optical branching waveguides, the optical signal enters the second transition waveguide and is split into a plurality of optical signals, and the plurality of optical signals enter the optical branching waveguides in a one-to-one manner. The optical signal enters the second transition waveguide from the second transmission segment, is split in the second transition waveguide and then enters the plurality of optical branching waveguides respectively. The optical signal is split into a plurality of balanced optical signals.

In a possible implementation, the optical branching waveguide includes a first optical splitting branch waveguide, a quantity of first optical splitting branch waveguides is two, the first optical splitting branch waveguide includes a first arc-shaped segment and a second arc-shaped segment, the first arc-shaped segment bends along a transmission direction of the optical signal toward a direction away from the other first optical splitting branch waveguide, and the second arc-shaped segment bends along the transmission direction of the optical signal toward a direction close to the other first optical splitting branch waveguide. The first optical splitting branch waveguide is of a double-arc-shaped structure, so that when the second transmission segment outputs the optical signal, the optical signal can be split and then enter the plurality of first optical splitting branch waveguides, and specific gaps exist between light output ports of the plurality of first optical splitting branch waveguides, to facilitate connection to a back-end fiber.

In a possible implementation, a cross-sectional area of at least a section of the first arc-shaped segment smoothly increases along the transmission direction of the optical signal, and a cross-sectional area of at least a section of the second arc-shaped segment smoothly decreases along the transmission direction of the optical signal. In this implementation, the first optical splitting branch waveguide is disposed in a thin-thick-thin structure. This effectively reduces a center deviation that occurs when an optical signal is transmitted in a bent waveguide, and improves balance of back-end optical splitting.

In a possible implementation, the optical branching waveguide further includes a second optical splitting branch waveguide, the second optical splitting branch waveguide is located between the two first optical splitting branch waveguides, and a section that is of the second optical splitting branch waveguide and that is connected to the second transition waveguide is in a straight-line shape. In this implementation, the second optical splitting branch waveguide is disposed, and the second optical splitting branch waveguide is disposed between the first optical splitting branch waveguides, to effectively reduce an optical splitting loss of an optical signal in the optical branching element.

In a possible implementation, the optical splitter further includes a first transition waveguide, the first transition waveguide is located between the optical input waveguide and the optical splitting waveguide, the optical signal is transmitted from the optical input waveguide into the first transition waveguide, and is split into a first optical signal and a plurality of second optical signals in the first transition waveguide, the first optical signal enters the first optical splitting waveguide, the plurality of second optical signals enter the second optical splitting waveguides in a one-to-one manner, and an energy value of the first optical signal is greater than an energy value of each second optical signal. The first transition waveguide is used to connect the optical input waveguide and the branch waveguide. The optical signal is split into the first optical signal and the second optical signal in the first transition waveguide. The first optical signal has a larger energy proportion and enters the first optical splitting waveguide, and the second optical signal has a smaller energy proportion and enters the second optical splitting waveguide.

In a possible implementation, the optical splitter further includes a substrate, the first optical splitting waveguide and the second optical splitting waveguide are both located in the substrate, and the first optical splitting waveguide and the second optical splitting waveguide are coplanar. The first optical splitting waveguide and the second optical splitting waveguide are formed in the substrate, and the first optical splitting waveguide is located between the second optical splitting waveguides, to form an uneven optical splitter in a form of planar waveguide, so that a branching loss of the optical splitter is low.

In a possible implementation, a quantity of second optical splitting waveguides is an even number, the plurality of second optical splitting waveguides are evenly divided into two parts, the two parts of the second optical splitting waveguides are mirror-symmetric to each other, and at least a section that is of the first optical splitting waveguide and that includes a light input end overlaps with a mirror axis of the second optical splitting waveguides. In this application, the second optical splitting waveguides are mirror-symmetric to each other, and at least the section that is of the first optical splitting waveguide and that includes a light input end overlaps with the mirror axis of the second optical splitting waveguides, so that energy proportions of all the second optical splitting waveguides are the same.

In a possible implementation, the plurality of second optical splitting waveguides are sequentially and evenly spaced apart along the circumferential direction of the first optical splitting waveguide, and a central axis of the second optical splitting waveguides overlaps with at least a section that is of the first optical splitting waveguide and that includes a light input end. The optical splitter described in this implementation is a waveguide optical splitter in a form of fused biconical taper, the first optical splitting waveguide is located between the plurality of second optical splitting waveguides, the first optical splitting waveguide is located at an energy center of an optical splitting plane, and an optical splitting position is located in a low-energy region. This reduces an optical signal loss during optical splitting. In addition, the second optical splitting waveguides are evenly spaced apart, and at least the section that is of the first optical splitting waveguide and that includes a light input end overlaps with the central axis of the second optical splitting waveguides, so that energy proportions of all the second optical splitting waveguides are the same.

According to a second aspect, not forming part of the claimed invention, this application provides an optical splitter chip. The optical splitter chip includes the optical splitter according to any one of the foregoing implementations, where the first optical splitting waveguide and the second optical splitting waveguide in the optical splitter are coplanar, and the plurality of second optical splitting waveguides are divided into two parts and located on two sides of the first optical splitting waveguide. The optical splitter chip further includes a substrate, and the first optical splitting waveguide and the second optical splitting waveguide are coplanar and located in the substrate, to form a plate-shaped optical splitter chip.

According to a third aspect, not forming part of the claimed invention, this application provides a communication device. The communication device includes any one of the foregoing optical splitters, and further includes an optical line terminal, where the optical line terminal is connected to the optical input waveguide of the optical splitter through a trunk fiber, and the optical line terminal is configured to input an optical signal to the optical input waveguide.

According to a fourth aspect, not forming part of the claimed invention, this application provides an optical distribution network. The optical distribution network includes any one of the foregoing optical splitters, and further includes an optical line terminal and a plurality of optical network units, where the optical line terminal is connected to the optical input waveguide of the optical splitter through a trunk fiber, the optical line terminal is configured to input an optical signal to the optical input waveguide, and the plurality of optical network units are connected to output ports of the optical splitter in a one-to-one manner through branch fibers. In the optical distribution network according to this application, in the optical splitter, the first optical splitting waveguide is disposed between the second optical splitting waveguides, so that the optical splitting line can be effectively disposed in the low-energy region of the optical signal. This effectively reduces a branching loss of optical energy, improves optical transmission efficiency of the optical distribution network, and improves optical signal quality.

In a possible implementation, there are a plurality of optical splitters, a part of the plurality of optical splitters are level-1 optical splitters, another part of the plurality of optical splitters are level-2 optical splitters, an input port of the level-2 optical splitter is connected to an output port of the level-1 optical splitter, and the output port is an output port of the first optical splitting waveguide and/or an output port of the second optical splitting waveguide.

### BRIEF DESCRIPTION OF DRAWINGS

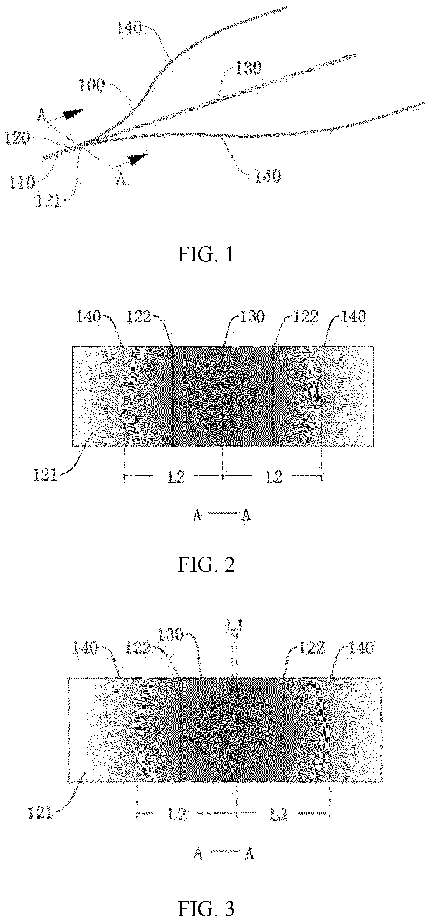

To describe technical solutions in embodiments of this application more clearly, the following describes the accompanying drawings used in embodiments of this application. The embodiments illustrated in Figures 1-15, 22, and 23 do not form part of the claimed invention, but are useful for understanding the invention.
FIG. 1 is a diagram of a structure of an optical splitter according to an implementation of this application;
FIG. 2 is a diagram of optical distribution that is of an optical splitter and that is on an optical splitting plane according to an implementation of this application;
FIG. 3 is a diagram of optical distribution that is of an optical splitter and that is on an optical splitting plane according to an implementation of this application;
FIG. 4 is a diagram of a mode field of an optical signal before and after optical splitting according to an implementation of this application;
FIG. 5 is a diagram of an uneven optical splitter in which a first optical splitting waveguide is located on a side of a second optical splitting waveguide according to an implementation of this application;
FIG. 6 is a diagram of optical distribution that is of the optical splitter shown in FIG. 5 and that is on an optical splitting plane;
FIG. 7 is a diagram of an optical splitter in a form of planar waveguide according to an implementation of this application;
FIG. 8 is a diagram of an internal waveguide of an optical splitter in a form of planar waveguide according to an implementation of this application;
FIG. 9 is an enlarged view of I in FIG. 7;
FIG. 10 is a diagram of a 1*5 uneven optical splitter according to an implementation of this application;
FIG. 11 is a diagram of an optical splitter in a form of fused biconical taper according to an implementation of this application;
FIG. 12 is a diagram of optical distribution that is of an optical splitter in a form of fused biconical taper and that is on an optical splitting plane according to an implementation of this application;
FIG. 13 is a diagram of a 1 *4 uneven optical splitter according to an implementation of this application;
FIG. 14 is a diagram of a structure of a second optical splitting waveguide according to an implementation of this application;
FIG. 15 is a diagram of a structure of a second optical splitting waveguide according to an implementation of this application;
FIG. 16 is a diagram of a thin-thick-thin structure of a second optical splitting waveguide according to an implementation of this application;
FIG. 17 is an enlarged view of II in FIG. 16;
FIG. 18 is a diagram of optical field energy transmission of second optical splitting waveguides of a thin-thick-thin structure and of a cross-section balanced structure according to an implementation of this application;
FIG. 19 is a diagram of a 1*9 uneven optical splitter according to an implementation of this application;
FIG. 20 is a diagram of a structure of a 1*2 optical branching element according to an implementation of this application;
FIG. 21 is a diagram of a structure of a 1*3 optical branching element according to an implementation of this application;
FIG. 22 is a diagram of a communication device according to an implementation of this application; and
FIG. 23 is a diagram of a structure of an optical distribution network according to an implementation of this application.

### DESCRIPTION OF EMBODIMENTS

The following describes embodiments of this application with reference to the accompanying drawings in embodiments of this application.

For ease of understanding, the following first explains and describes English abbreviations and related technical terms used in embodiments of this application.

PON is a typical passive optical network. An optical distribution network does not contain any electronic power supply or electronic component. The optical distribution network (ODN) includes only passive components such as splitters (Splitters) and does not require an expensive active electronic device. A passive optical network includes an optical line terminal (OLT) installed at a central control station and a batch of matching optical network units (ONUs) installed at a user site.

FTTH means fiber to the home (Fiber (Fiber) To The Home, FTTH), and is a transmission method of fiber communication. Specifically, FTTH means installation of an optical network unit (ONU) at a site of a home user or an enterprise user, and is an optical access network application type closest to a user in optical access series except for FTTD (fiber to the desktop).

It should be noted that the described embodiments are merely some but not all of embodiments of this application.

Terms used in embodiments of this application are merely for the purpose of describing specific embodiments, but are not intended to limit this application. The terms "a", "said" and "the" of singular forms used in embodiments and the appended claims of this application are also intended to include plural forms, unless otherwise specified in the context clearly.

It should be understood that the term "and/or" in this specification describes only a field for describing associated objects and represents that three relationships may exist. For example, A and/or B may represent the following three cases: Only A exists, both A and B exist, and only B exists. In addition, the character "/" in this specification generally indicates an "or" relationship between the associated objects.

Depending on a context, for example, coupling of two components used herein may be understood as contact connection of the two components, or coupling of the two components may be understood as non-contact connection of the two components. This is not directly limited in this application. The term "connection" used in this specification may be understood as a direct contact connection, or may be understood as an indirect connection. Descriptions of same or similar parts are omitted below.

The optical splitter described in embodiments of this application is a passive component, and is also referred to as a splitter. When the optical splitter operates, power supply is not required, and optical splitting can be implemented provided that light is input. The optical splitter includes an incident slit and an emergent slit, a reflector, and a dispersion element, and is used to separate a required resonance absorption line.

This application provides an optical splitter 100. Refer to FIG. 1. The optical splitter includes an optical input waveguide 110, a first transition waveguide 120, and an optical splitting waveguide. The optical splitter may be in a form of fused biconical taper, or may be in a form of planar waveguide. In this implementation, an optical splitter in a form of planar waveguide is used as an example.

In the optical splitter in a form of planar waveguide, the optical input waveguide 110 and the optical splitting waveguide are located on a same plane. Specifically, the optical input waveguide 110 is configured to receive an optical signal, and input the optical signal to the first transition waveguide 120. A light output side of the first transition waveguide 120 is coupled to the optical splitting waveguide, and there are a plurality of optical splitting waveguides, to split the optical signal input by the optical input waveguide 110 into a plurality of optical signals. An optical signal is mainly transmitted in a waveguide in a form of fundamental mode. At a branch, a mode field of the fundamental mode is distorted, and one optical signal is split into a plurality of optical signals, causing a mode field mismatch and a branching loss. In addition, more branches indicate a greater loss. Each 1:2 optical splitting may generate a loss of approximately 3.5 dB.

Refer to FIG. 1. The optical splitting waveguide in this implementation includes a first optical splitting waveguide 130 and a second optical splitting waveguide 140, and there are a plurality of second optical splitting waveguides 140. In this implementation, two second optical splitting waveguides are used as an example.

Specifically, the optical signal input by the optical input waveguide 110 is split into one first optical signal and two second optical signals in the first transition waveguide 120, the first optical signal enters the first optical splitting waveguide 130, and the two second optical signals respectively enter the two second optical splitting waveguides 140. The first optical splitting waveguide 130 is located between the two second optical splitting waveguides 140, and the two second optical splitting waveguides 140 are located on two sides of the first optical splitting waveguide 130.

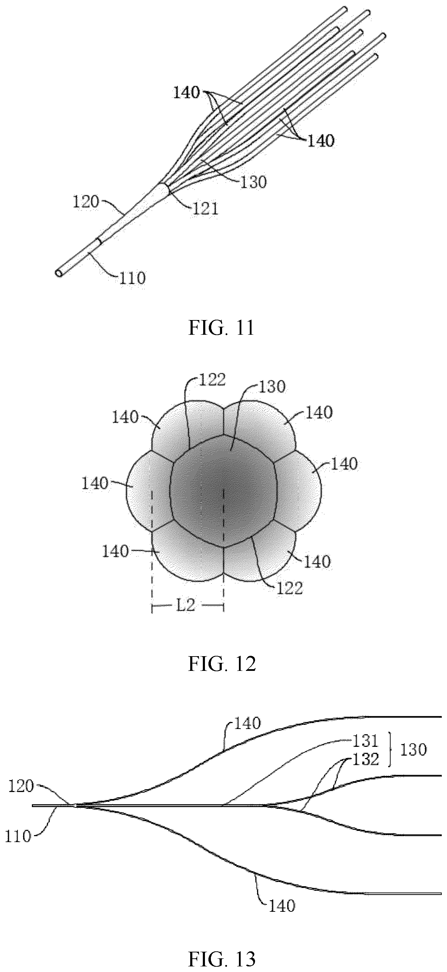

Refer to FIG. 1 and FIG. 13. The first optical splitting waveguide 130 includes a first connection segment 131 and a first transmission segment 132. The first connection segment 131 is coupled to the first transition waveguide 120, and the first connection segment 131 is in a straight-line shape. The first optical signal enters the first transmission segment 132 after passing through the first connection segment 131. The first transmission segment 132 includes one 1*2 optical splitting branch waveguide, and the 1*2 optical splitting branch waveguide is of a double-arc-shaped structure, so that after the first optical signal is split into two optical signals, an optical signal output by a light output port of the first transmission segment 132 is parallel to a transmission direction of the optical signal in the first connection segment 131. For example, the first optical splitting waveguide 130 accounts for 70% of optical energy, and the second optical splitting waveguides 140 account for 30% of the optical energy. Proportions of optical energy output by the uneven optical splitter in this implementation sequentially are 15%, 30%, 30%, and 15% from top to bottom.

Specifically, in this implementation, the first optical splitting waveguide 130 is not in a straight-line shape as a whole, in the first optical splitting waveguide 130, only the first connection segment 131 coupled to the first transition waveguide 120 is in a straight-line shape, and the first connection segment 131 overlaps with a central axis of the second optical splitting waveguides 140.

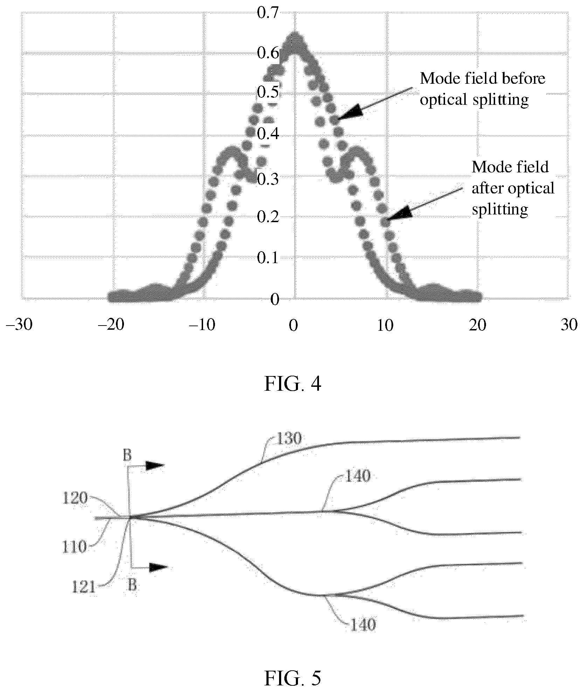

Refer to FIG. 2 and FIG. 4. FIG. 2 is a diagram in which an optical signal is split on an optical splitting plane 121. FIG. 4 is a diagram of a mode field of an optical signal before and after optical splitting. An optical signal is mainly transmitted in a waveguide in a form of fundamental mode, and presents a distribution manner in which energy gradually decreases from the middle to a surrounding outer side. In FIG. 2, a darker color corresponds to stronger optical energy. For the uneven optical splitter, energy of the first optical signal in the first optical splitting waveguide 130 is different from energy of the second optical signal in the second optical splitting waveguide 140, so that optical energy finally output by the optical splitter is not equal.

In this implementation, refer to FIG. 2. An optical splitting distance L1 of the first optical splitting waveguide 130 is less than an optical splitting distance L2 of each second optical splitting waveguide 140. In other words, the optical splitting distance L1 is less than a smaller value in the two optical splitting distances L2. An optical splitting distance is a distance between an energy center in the first transition waveguide 120 and an energy center in the optical splitting waveguide. In this implementation, an energy center of the first optical splitting waveguide 130 overlaps with an energy center of the first transition waveguide 120. Therefore, the optical splitting distance L1 of the first optical splitting waveguide 130 is 0, and is not shown in FIG. 2. The optical splitting distance of the second optical splitting waveguide 140 is L2, and a value of the optical splitting distance L2 is greater than a value of the optical splitting distance L1. When a center of the optical splitting plane 121 overlaps with the energy center in the first transition waveguide 120, the optical splitting distance may alternatively be determined by measuring a gap between a central axis of the optical splitting waveguide and the center of the optical splitting plane 121.

When an optical signal energy center in the optical splitting plane 121 deviates from the center of the optical splitting plane 121 to a specific extent, refer to FIG. 3. The optical signal energy center in the optical splitting plane 121 deviates to a specific extent to a right side relative to the center of the optical splitting plane 121. In this case, the optical splitting distance L1 of the first optical splitting waveguide 130 is less than the optical splitting distance L2 of the second optical splitting waveguide 140.

The optical splitting plane 121 described in this application is a plane on which one optical signal is split into a plurality of optical signals, and an input optical signal is on a side that is of the optical splitting plane 121 and that faces the optical input waveguide 110. In this case, the optical signal is not split, and there is no optical loss. A split optical signal is on a side that is of the optical splitting plane 121 and that faces the optical splitting waveguide. In this case, the optical signal is split into three optical signals and then enters the three optical splitting waveguides respectively. Compared with that of the optical signal before optical splitting, total energy of the optical signals after optical splitting experiences an optical energy loss, and the optical energy loss mainly occurs on a branch structure of the optical splitting plane 121.

In this implementation, an optical energy proportion of the first optical splitting waveguide 130 is greater than an optical energy proportion of each second optical splitting waveguide 140, each second optical splitting waveguide 140 means every second optical splitting waveguide 140, and the optical energy proportion of the first optical splitting waveguide 130 is greater than the optical energy proportion of any second optical splitting waveguide 140. For example, the first optical splitting waveguide 130 accounts for 70% of energy, and one second optical splitting waveguide 140 accounts for 15% of the energy. A total energy sum of one first optical splitting waveguide 130 and two second optical splitting waveguides 140 is approximately 100% (in practice, an energy loss occurs, and a total energy sum is less than 100%). In this implementation, the first optical splitting waveguide 130 with a high energy proportion is disposed between the two second optical splitting waveguides 140 with a low energy proportion. Refer to FIG. 2. An optical splitting line 122 (an optical signal is split into two optical signals at the optical splitting line 122) is located in a left part region of the optical splitting plane 121, an optical energy proportion of a left side of the optical splitting line 122 is approximately 15%, the optical splitting line 122 in the left half is located in a low-energy region of the optical signal, and a branching loss is correspondingly low when optical splitting is performed herein. Similarly, another optical splitting line 122 is located in a right part region of the optical splitting plane 121, an optical energy proportion of a right side of the optical splitting line 122 is approximately 15%, the optical splitting line 122 is located in a low-energy region of the optical signal, and a branching loss is correspondingly low when optical splitting is performed herein. In addition, the first optical splitting waveguide 130 is located between the plurality of second optical splitting waveguides 140, and the first connection segment 131 that is of the first optical splitting waveguide 130 and that is connected to the optical input waveguide 110 is a straight-line segment, so that an optical signal can be efficiently transmitted, and an energy loss during optical signal transmission can be reduced, to reduce an overall energy loss of the optical splitter in correspondence to and collaboration with branching loss reduction.

It should be noted that, when the energy proportion of the first optical splitting waveguide 130 is 70%, and the energy proportion of the second optical splitting waveguide 140 is 15% in FIG. 2, because the second optical splitting waveguide 140 in the optical splitter 100 is mostly arc-shaped, and the first optical splitting waveguide 130 is mostly in a straight-line shape, the arc-shaped waveguide and the waveguide in a straight-line shape have different optical transmission efficiency and different energy losses. A deviation caused by different transmission environments is taken into account. To achieve a predetermined target output energy proportion, when optical splitting is performed on the optical splitting plane 121, a specific deviation is set for a proportion of energy directly entering each branch waveguide. Optical energy of a middle part in FIG. 2 is approximately 70%, and optical energy of the left part and the right part in FIG. 2 is approximately 15%, to balance energy loss generated by waveguides in different shapes.

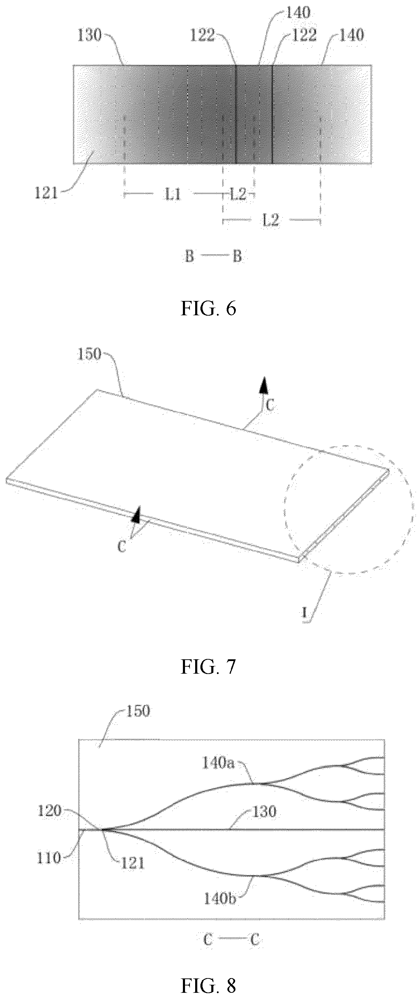

Refer to FIG. 5 and FIG. 6. The first optical splitting waveguide 130 in the optical splitter shown in FIG. 5 is located on one side of the two second optical splitting waveguides 140. One second optical splitting waveguide 140 is located between the other second optical splitting waveguide 140 and the first optical splitting waveguide 130. FIG. 6 is a diagram of optical energy distribution of the optical splitting plane 121 in an optical splitting waveguide distribution manner shown in FIG. 5. Similarly, in the distribution manner shown in FIG. 5, for example, the energy proportion of the first optical splitting waveguide 130 is 70%, and the energy proportion of one second optical splitting waveguide 140 is 15%. Refer to FIG. 6. In this distribution manner, a right-side optical splitting line 122 is close to the right-side optical splitting line 122 shown in FIG. 2, and an optical energy proportion of a right side of the right-side optical splitting line 122 is approximately 15%. However, an optical energy proportion between a left-side optical splitting line 122 and the right-side optical splitting line 122 in FIG. 6 is approximately 15%, so that the left-side optical splitting line 122 is located in a region with higher optical signal energy, and a branching loss is higher when optical splitting is performed herein. It can be learned that, in this application, the first optical splitting waveguide 130 is disposed between the two second optical splitting waveguides 140, so that the optical splitting line 122 can be effectively disposed in a low-energy region of the optical signal. This effectively reduces a branching loss of optical energy.

In addition, refer to FIG. 2 and FIG. 4. According to the optical splitter 100 in this implementation, because central energy of an optical signal is high, outer side energy is low, and the center energy of the optical signal accounts for a larger proportion, when the first optical splitting waveguide 130 accounts for 70% of energy, and one second optical splitting waveguide 140 accounts for 15% of the energy, the left optical splitting line 122 and the right optical splitting line 122 are respectively located at positions at approximately one-third of the optical splitting plane 121. In this case, the first optical splitting waveguide 130 and the second optical splitting waveguide 140 have approximately equal cross-sectional areas, so that a cross section of the second optical splitting waveguide 140 in the optical splitting region is not to be excessively small, and manufacturing of the optical splitter 100 is more convenient. However, in the optical splitters shown in FIG. 5 and FIG. 6, the first optical splitting waveguide 130 and the second optical splitting waveguide 140 have a large cross-sectional size difference, and the second optical splitting waveguide 140 in the middle has a small size, which makes it difficult to manufacture the optical splitter 100.

**Table 1. Energy table of an uneven optical splitter that includes a first optical splitting waveguide and two second optical splitting waveguides**

| Wavelength/nm | Port | Energy ratio | Insertion loss/dB | Total energy | Total loss/dB |
|---|---|---|---|---|---|
| | First optical splitting waveguide | 69% | 1.61 | | |
| 1260 | Second optical splitting waveguide 140a | 13.7% | 8.63 | 96.4% | 0.159 |
| | Second optical splitting waveguide 140b | 13.7% | 8.63 | | |

Refer to Table 1. For the uneven optical splitter described in this implementation, it is determined through a test that the energy proportion of the first optical splitting waveguide 130 is 69%, and an insertion loss is 1.61 dB; the energy proportion of one second optical splitting waveguide 140a in the two second optical splitting waveguides 140 is 13.7%, and an insertion loss is 8.63 dB; and the energy proportion of the other second optical splitting waveguide 140b is 13.7%, and an insertion loss is 8.63 dB. A total energy proportion of the first optical splitting waveguide 130 and the two second optical splitting waveguides 140 reaches 96.4% of the input optical signal, and approximately 3.6% of energy is lost. A total loss is 0.159 dB, and an optical energy loss is low.

In a possible implementation, refer to FIG. 7 to FIG. 9. An example in which the optical splitter is an optical splitter in a form of planar waveguide is used in this implementation. The optical splitter further includes a substrate 150, and the substrate 150 may be made of a quartz material.

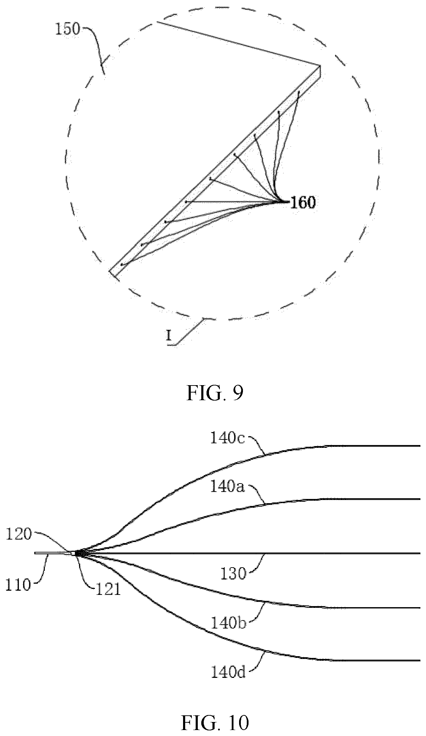

The optical input waveguide 110, the first transition waveguide 120, and the branch waveguide are waveguide paths formed in the substrate 150 by using an etching process. Specifically, cross sections of the optical input waveguide 110, the first transition waveguide 120, and the branch waveguide in this implementation are all squares, the optical input waveguide 110, the first transition waveguide 120, and the branch waveguide are all located in the substrate 150, the optical input waveguide 110 forms a light inlet (not shown in the figure) on one side of the substrate 150, and the branch waveguide forms a plurality of light output ends 160 on the other side of the substrate 150 (refer to FIG. 9).

A quantity N1 of the second optical splitting waveguides 140 is an even number, and may be 2, 4, 6, 8, or the like. When N1 is 2, refer to FIG. 8. Two second optical splitting waveguides 140 are respectively a second optical splitting waveguide 140a and a second optical splitting waveguide 140b, and the second optical splitting waveguide 140a and the second optical splitting waveguide 140b are respectively located on two sides of the first optical splitting waveguide 130.

When N1 is 4, refer to FIG. 10. Four second optical splitting waveguides 140 are respectively the second optical splitting waveguide 140a, the second optical splitting waveguide 140b, a second optical splitting waveguide 140c, and a second optical splitting waveguide 140d. The four second optical splitting waveguides 140 may be evenly divided into two parts, the second optical splitting waveguide 140a and the second optical splitting waveguide 140c are located on one side of the first optical splitting waveguide 130, and the second optical splitting waveguide 140b and the second optical splitting waveguide 140d are located on the other side of the first optical splitting waveguide 130. Specifically, the energy proportion of the first optical splitting waveguide 130 is the highest, and may be approximately 60%; energy proportions of the second optical splitting waveguide 140a and the second optical splitting waveguide 140b are lower, and may be approximately 12.5% respectively; and energy proportions of the second optical splitting waveguide 140c and the second optical splitting waveguide 140d are the lowest, and may be approximately 7.5% respectively. For the second optical splitting waveguides 140 on both sides of the first optical splitting waveguide 130, the energy proportion of the second optical splitting waveguide 140 gradually decreases along a direction away from the first optical splitting waveguide 130.

As described above, when N1 is an even number such as 8 or 10, the second optical splitting waveguides 140 may be evenly divided into two parts, and the first optical splitting waveguide 130 is located between the two parts of the evenly divided second optical splitting waveguides 140, so that the optical splitting distance L1 that is of the first optical splitting waveguide 130 and that is at the optical splitting plane 121 is less than the optical splitting distance L2 of the second optical splitting waveguide 140. This reduces an optical loss of optical splitting performed on the optical signal at the optical splitting plane 121.

In a possible implementation, refer to the optical splitters shown in FIG. 8 and FIG. 10. The N1 second optical splitting waveguides 140 are evenly divided into two parts, and the two parts of the second optical splitting waveguides 140 are mirror-symmetric to each other. The first optical splitting waveguide 130 may be a straight-line waveguide, or a section that is of the first optical splitting waveguide 130 and that is coupled to the first transition waveguide 120 is a straight-line waveguide, and the straight-line segment waveguide of the first optical splitting waveguide 130 overlaps with a mirror axis of the N1 second optical splitting waveguides 140.

For a 1*3 optical splitter shown in FIG. 13, the two second optical splitting waveguides 140 are respectively the second optical splitting waveguide 140a and the second optical splitting waveguide 140b, the second optical splitting waveguide 140a and the second optical splitting waveguide 140b are respectively located on two sides of the first optical splitting waveguide 130, the first optical splitting waveguide 130 is a straight-line waveguide, and the second optical splitting waveguide 140a and the second optical splitting waveguide 140b are mirror-symmetric with respect to a straight line on which the first optical splitting waveguide 130 is located and that is used as a mirror axis. For the two second optical splitting waveguides 140 mirror-symmetric to each other, energy proportions of input optical signals entering the two second optical splitting waveguides 140 are the same, transmission statuses of the optical signals in the two second optical splitting waveguides 140 are the same, and transmission losses in the second optical splitting waveguides 140 are the same, so that energy of optical signals output by the two second optical splitting waveguides 140 is the same, to form a 1*3 uneven optical splitter (output energy proportions may be sequentially 15%, 70%, and 15%).

For a 1*5 optical splitter shown in FIG. 10, the second optical splitting waveguide 140a and the second optical splitting waveguide 140c are located on one side of the first optical splitting waveguide 130, the second optical splitting waveguide 140b and the second optical splitting waveguide 140d are located on the other side of the first optical splitting waveguide 130, and the first optical splitting waveguide 130 is a straight-line waveguide. The second optical splitting waveguide 140a and the second optical splitting waveguide 140b are mirror-symmetric with respect to the straight line on which the first optical splitting waveguide 130 is located and that is used as the mirror axis, and transmission statuses of optical signals in the second optical splitting waveguide 140a and the second optical splitting waveguide 140b are the same. The second optical splitting waveguide 140c and the second optical splitting waveguide 140d are mirror-symmetric with respect to the straight line on which the first optical splitting waveguide 130 is located and that is used as the mirror axis, and transmission statuses of optical signals in the second optical splitting waveguide 140c and the second optical splitting waveguide 140d are the same. The optical splitter in FIG. 10 forms a 1*5 uneven optical splitter (output energy proportions may be sequentially 7.5%, 12.5%, 60%, 12.5%, and 7.5%).

In a possible implementation, the optical splitter in this implementation may be an optical splitter in a form of fused biconical taper. Refer to FIG. 11. There is one first optical splitting waveguide 130, and the first optical splitting waveguide 130 may be in a straight-line shape. Specifically, when the optical splitter is an optical splitter in a form of fused biconical taper, cross sections of the optical input waveguide 110, the first transition waveguide 120, the first optical splitting waveguide 130, and the second optical splitting waveguide 140 may all be circular, there are a plurality of second optical splitting waveguides 140, and the plurality of second optical splitting waveguides 140 are sequentially spaced apart along the circumferential direction of the first optical splitting waveguide 130. In this implementation, an example in which a quantity of second optical splitting waveguides 140 is 6 is used.

Refer to FIG. 12. For an optical splitter in a form of fused biconical taper, optical energy is mostly transmitted in a form of fundamental mode, and optical energy distribution with high central energy and low outer side energy is presented. In this implementation, the first optical splitting waveguide 130 is disposed in a center of the branch waveguide, and the energy proportion of the first optical splitting waveguide 130 is higher than the energy proportion of the second optical splitting waveguide 140.

A quantity of first optical splitting waveguides 130 is 1, and a quantity of second optical splitting waveguides 140 may be 3, 4, 5, or the like. In this implementation, six second optical splitting waveguides 140 are used as an example. The energy proportion of the first optical splitting waveguide 130 may be 70%, and the energy proportion of each second optical splitting waveguide 140 may be 5%, to form 1*7 uneven optical splitter.

Specifically, refer to FIG. 12. A central axis of the first optical splitting waveguide 130 overlaps with the center of the optical splitting plane 121, the optical splitting distance L1 of the first optical splitting waveguide 130 is 0, and the optical splitting distance L1 of the first optical splitting waveguide 130 is not shown in the figure. The optical splitting distance L2 of the second optical splitting waveguide 140 is greater than the optical splitting distance L1 of the first optical splitting waveguide 130, the first optical splitting waveguide 130 is closer to the center of the optical signal, and the first optical splitting waveguide 130 and the second optical splitting waveguide 140 perform optical splitting in a low-energy region at an edge of the optical signal, so that an optical splitting loss is lower.

In a possible implementation, refer to FIG. 11. The plurality of second optical splitting waveguides 140 are sequentially spaced apart along the circumferential direction of the first optical splitting waveguide 130. In this implementation, one first optical splitting waveguide 130 and six second optical splitting waveguides 140 are used as an example. The first optical splitting waveguide 130 is in a straight-line shape, and the six second optical splitting waveguides 140 are of a centrosymmetric structure with respect to the straight line on which the first optical splitting waveguide 130 is located.

The six second optical splitting waveguides 140 are of the centrosymmetric structure with respect to the straight line on which the first optical splitting waveguide 130 is located, so that transmission statuses of the optical signal entering each second optical splitting waveguide 140 after optical splitting are the same, energy proportions distributed to the second optical splitting waveguides 140 are the same, and energy output by the second optical splitting waveguides 140 is also the same.

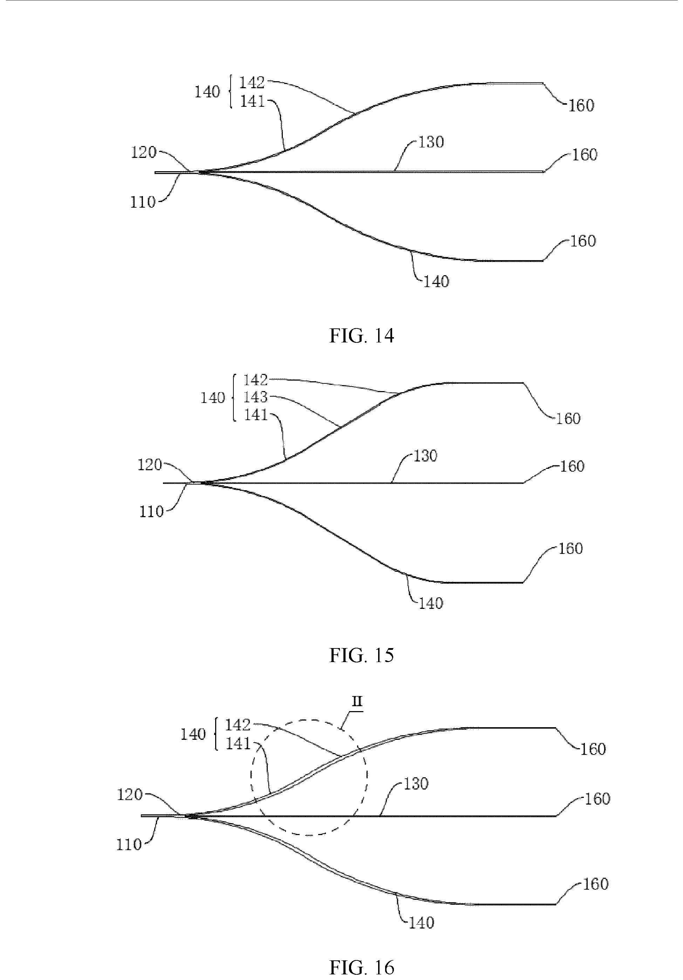

In a possible implementation, refer to FIG. 14. The second optical splitting waveguide 140 includes a second connection segment 141 and a second transmission segment 142. The second connection segment 141 is located between the first transition waveguide 120 and the second transmission segment 142. The second connection segment 141 is coupled to the first transition waveguide 120. The second connection segment 141 and the second transmission segment 142 may be two parts of one entire waveguide, or may be two connected waveguides.

The second optical signal sequentially flows through the second connection segment 141 and the second transmission segment 142. Specifically, both the second connection segment 141 and the second transmission segment 142 are arc-shaped, the second connection segment 141 bends along a transmission direction of the second optical signal toward the direction away from the first optical splitting waveguide 130, and the second transmission segment 142 bends along the transmission direction of the second optical signal toward a direction close to the first optical splitting waveguide 130.

Specifically, the second connection segment 141 and the second transmission segment 142 are tangent at a bordering position, so that when the second optical signal passes through the second connection segment 141 and the second transmission segment 142, total internal reflection can be performed on a smooth transition inner wall surface of the waveguide. This avoids an energy loss in a bordering region.

Refer to FIG. 1 and FIG. 14. After the optical signal is split into three optical signals, the three optical signals respectively enter the first optical splitting waveguide 130 and the two second optical splitting waveguides 140. Specifically, cross-sectional areas of the first optical splitting waveguide 130 and the second optical splitting waveguide 140 are small, and are mostly within a micrometer range.

In addition, fibers need to be connected after the first optical splitting waveguide 130 and the second optical splitting waveguide 140 through corresponding interfaces, to transmit the optical signal to a back-end device. A size of the interface is mostly within a millimeter range. Therefore, a large gap needs to exist between the light output ends 160 of the first optical splitting waveguide 130 and the second optical splitting waveguide 140, and the second optical splitting waveguide 140 needs to be bent to a specific extent to implement a specific distance between the first optical splitting waveguide 130 and the second optical splitting waveguide 140.

In addition, a bending radius of the waveguide should not be excessively small, and a bending degree of the waveguide should not be excessively large, to ensure that the optical signal is transmitted in the waveguide structure in a total internal reflection manner. This avoids an energy loss caused by refraction of the optical signal.

In addition, the second optical splitting waveguide 140 in this implementation is of a double-arc-shaped structure. After the second optical splitting waveguide bends toward the side away from the first optical splitting waveguide 130, a rear side part of the second optical splitting waveguide 140 bends toward the direction close to the first optical splitting waveguide 130, to ensure that a light output direction of the second optical splitting waveguide 140 is consistent with a light output direction of the first optical splitting waveguide 130, and fibers connected to the light output side are parallel to each other. This effectively controls a size of the optical splitter and ensures reasonableness of the structure of the optical splitter.

Specifically, refer to FIG. 14. The second transmission segment 142 includes the light output end 160, and a light output direction of the light output end 160 is parallel to the first connection segment 131, so that after the second optical splitting waveguide 140 deviates toward two sides of the first optical splitting waveguide 130, a transmission direction of an optical signal is not changed. The light output end 160 is an end that is of the second transmission segment 142 and that is away from the second connection segment 141.

In a possible implementation, refer to FIG. 15. The second optical splitting waveguide 140 in this implementation further includes a third transmission segment 143. The third transmission segment 143 is located between the second connection segment 141 and the second transmission segment 142, the third transmission segment 143 is a straight-line segment, the third transmission segment 143 and the second connection segment 141 are tangent at a connection point, and the third transmission segment 143 and the second transmission segment 142 are tangent at a connection point. The second connection segment 141, the second transmission segment 142, and the third transmission segment 143 may be three parts of one entire waveguide, or may be three waveguides that are sequentially connected.

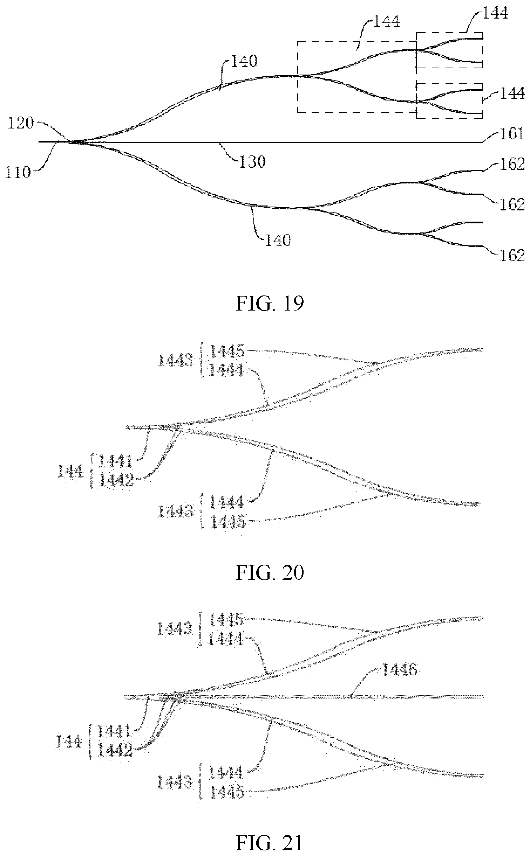

Refer to FIG. 19. When the optical splitter is a 1*9 uneven optical splitter, a back end of the second optical splitting waveguide 140 is cascaded with a plurality of optical branching waveguides. In this case, a large gap needs to be reserved between the first optical splitting waveguide 130 and the second optical splitting waveguide 140, so that the plurality of branch waveguides cascaded with the back end have sufficient space to bend and there is a specific gap between a plurality of light output ends of optical signals.

According to the optical splitter in this implementation, when the back end of the second optical splitting waveguide 140 can be cascaded with the plurality of optical branching waveguides, it can be ensured that the large gap exists between the second optical splitting waveguide 140 and the first optical splitting waveguide 130. In addition, this implementation is different from a manner in which lengths of the second connection segment 141 and the second transmission segment 142 are increased in that the third transmission segment 143 is disposed as a straight-line segment, to increase a gap between the second optical splitting waveguide 140 and the first optical splitting waveguide 130 without increasing a length of a bent part in the second optical splitting waveguide 140, so that a large energy loss caused by a long path that is of a bent waveguide and through which an optical signal passes is avoided.

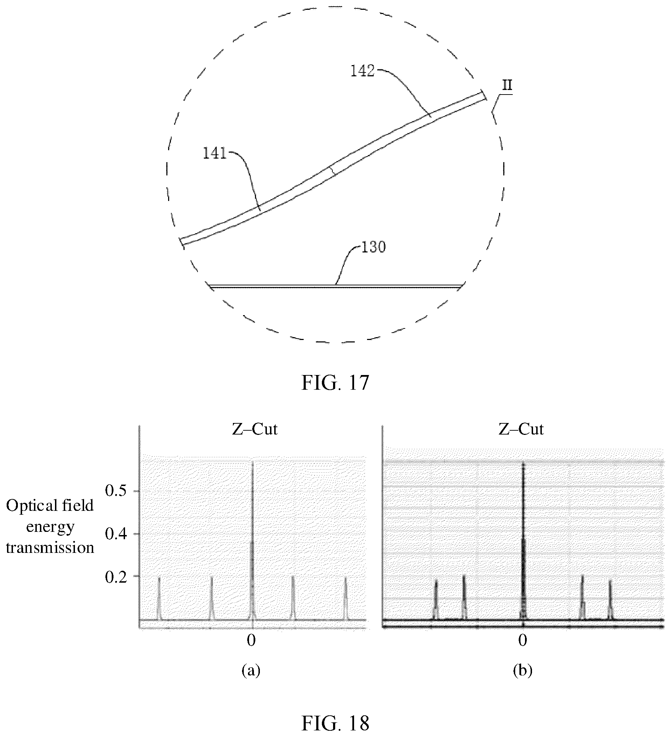

In an implementation according to the claimed invention, refer to FIG. 16 and FIG. 17. The second optical splitting waveguide 140 includes the second connection segment 141 and the second transmission segment 142. The second connection segment 141 is located between the first transition waveguide 120 and the second transmission segment 142. The second connection segment 141 is coupled to the first transition waveguide 120. The second connection segment 141 and the second transmission segment 142 may be two parts of one entire waveguide, or may be two connected waveguides.

The second optical signal sequentially flows through the first transition waveguide 120, the second connection segment 141, and the second transmission segment 142. Specifically, both the second connection segment 141 and the second transmission segment 142 are arc-shaped, the second connection segment 141 bends along the transmission direction of the second optical signal toward the direction away from the first optical splitting waveguide 130, and the second transmission segment 142 bends along the transmission direction of the second optical signal toward the direction close to the first optical splitting waveguide 130.

Specifically, refer to FIG. 17. A cross-sectional area of at least a section of the second connection segment 141 smoothly increases along the transmission direction of the second optical signal. In this implementation, a cross-sectional area of an overall section of the second connection segment 141 smoothly increases along the transmission direction of the second optical signal, a part that is of the second connection segment 141 and that is coupled to the first transition waveguide 120 is a thinnest part of the second connection segment 141, and a part that is of the second connection segment 141 and that is bordered to the second transmission segment 142 is a thickest part of the second connection segment 141.

Refer to FIG. 17. A cross-sectional area of at least a section of the second transmission segment 142 smoothly decreases along the transmission direction of the second optical signal. In this implementation, a cross-sectional area of an overall section of the second transmission segment 142 smoothly decreases along the transmission direction of the second optical signal, a part that is of the second transmission segment 142 and that is coupled to the second connection segment 141 is a thickest part of the second transmission segment 142, and the back-end light output end 160 of the second transmission segment 142 is a thinnest part of the second transmission segment 142.

It should be noted that a smooth increase and smooth decrease described in this application means that in the increasing and decreasing process, the inner wall surface of the waveguide always has a smooth transition, no stepwise or disconnected increase and decrease occur, and inner wall surfaces of the second connection segment 141 and the second transmission segment 142 are smooth curved surfaces.

**Table 2. Energy distribution table of a 1*9 uneven optical splitter of a thin-thick-thin structure**

| Wavelength/nm | Port | Energy ratio | Port insertion loss/dB | Total energy | Total loss/dB |
|---|---|---|---|---|---|
| | 1 | 69% | 1.61 | | |
| | 2 | 3.36% | 14.73 | | |
| | 3 | 3.4% | 14.68 | | |
| | 4 | 3.21% | 14.93 | | |
| 1260 | 5 | 3.23% | 14.91 | 95.4% | 0.213 |
| | 6 | 3.23% | 14.91 | | |
| | 7 | 3.21% | 14.93 | | |
| | 8 | 3.4% | 14.68 | | |
| | 9 | 3.36% | 14.73 | | |

The second optical splitting waveguide 140 described in this implementation is of a thin-thick-thin structure. When the second optical signal is transmitted in a bent waveguide in the second optical splitting waveguide 140, center deviation occurs due to reflection effect of the arc-shaped waveguide, and an energy center of the second optical signal deviates from a center of the second optical splitting waveguide 140. In this implementation, the second optical splitting waveguide 140 is disposed in the thin-thick-thin structure. As the cross-sectional area of the second optical splitting waveguide 140 increases, a center deviation degree of the second optical signal is correspondingly reduced, to improve optical splitting balance when optical splitting is performed at the back end of the second optical splitting waveguide 140.

Refer to Table 2. For the 1*9 uneven optical splitter, when the bent second optical splitting waveguide 140 of the 1*9 uneven optical splitter is of the thin-thick-thin structure described in this implementation, a largest energy difference between output optical energy of eight even optical splitting waveguides is less than 0.25 dB (an insertion loss of a light output port is 14.93 dB, an insertion loss of a light output port is 14.68 dB, and a largest energy deviation obtained by calculating a difference between two pieces of data is 0.25 dB). Light output balance of the optical splitter is good.

Refer to FIG. 18. The 1*5 uneven optical splitter in which the bent second optical splitting waveguide 140 is of the thin-thick-thin structure described in this implementation is different from an optical splitter in which a cross-sectional area of the bent second optical splitting waveguide 140 is the same in that optical energy output balance of the four even optical splitting waveguides is greatly improved, so that optical splitting balance can be effectively improved when optical splitting is performed at the back end of the second optical splitting waveguide 140. Optical field energy transmission of the optical splitter of the thin-thick-thin structure is shown in (a) in FIG. 18, and optical field energy transmission of the optical splitter with the same cross-sectional area is shown in (b) in FIG. 18.

In a possible implementation, refer to FIG. 19. The second optical splitting waveguide 140 in this implementation further includes an optical branching element 144, and the second transmission segment 142 is cascaded with at least one optical branching element 144 at the light output end.

Specifically, the optical splitter may be cascaded with a plurality of levels of optical branching elements 144 at the back end of the second optical splitting waveguide 140, and the optical branching element 144 may be a 1*2 optical branching element, or may be an optical branching element such as a 1*3, 1*4, or 1*5 optical branching element. This is specifically determined based on an optical splitting ratio of the optical splitter. All second optical splitting waveguides 140 in a finally formed optical splitter have N2 second waveguide output ports 162, and N2 is an even number greater than or equal to 4.

Specifically, in this implementation, the light output end of the second transmission segment 142 of each second optical splitting waveguide 140 is cascaded with a first-level optical branching element 144, and two branch back ends of the optical branching elements 144 are cascaded with two optical branching elements 144, to form the 1*9 uneven optical splitting waveguide shown in FIG. 19. The first optical splitting waveguide 130 has one first waveguide output port 161, and the second optical splitting waveguide 140 has eight second waveguide output ports 162. Optical energy output by the first waveguide output port 161 is different from optical energy output by the second waveguide output port 162, and optical energy output by the eight second waveguide output ports 162 is almost the same.

Specifically, refer to FIG. 20. The optical branching element 144 in this implementation may include a second transition waveguide 1441 and a plurality of optical branching waveguides 1442, a quantity of optical branching waveguides 1442 may be 2, 3, or 4, and two optical branching waveguides 1442 are used as an example in this implementation. The second optical signal output by the second transmission segment 142 enters the second transition waveguide 1441, and is split into a plurality of optical signals in the second transition waveguide 1441. The plurality of optical signals enter the optical branching waveguides 1442 in a one-to-one manner.

Similar to structures of the second connection segment 141 and the second transmission segment 142, the optical branching waveguide 1442 in this implementation includes a first optical splitting branch waveguide 1443, and there are two first optical splitting branch waveguides 1443. The first optical splitting branch waveguide 1443 is in an arc shape, and includes a first arc-shaped segment 1444 and a second arc-shaped segment 1445. An optical signal is sequentially transmitted through the first arc-shaped segment 1444 and the second arc-shaped segment 1445. The first arc-shaped segment 1444 bends along the transmission direction of the second optical signal toward a direction away from the other first optical splitting branch waveguide 1443, and the second arc-shaped segment 1445 bends along the transmission direction of the second optical signal toward a direction close to the other first optical splitting branch waveguide 1443, so that the two first optical splitting branch waveguides 1443 that are opposite to each other form a double-arc-shaped structure, and there is a specific gap between two light output ports of the first optical splitting branch waveguide 1443.

Specifically, a straight-line segment waveguide may further be added between the first arc-shaped segment 1444 and the second arc-shaped segment 1445, to increase a gap between two adj acent first optical splitting branch waveguides 1443, to ensure that a back end of the first optical splitting branch waveguide 1443 can be cascaded with another optical branching element 144.

In a possible implementation, refer to FIG. 20. A cross-sectional area of at least a section of the first arc-shaped segment 1444 smoothly increases along the transmission direction of the second optical signal. In this implementation, a cross-sectional area of an overall section of the first arc-shaped segment 1444 smoothly increases along the transmission direction of the second optical signal, a part that is of the first arc-shaped segment 1444 and that is coupled to the second transition waveguide 1441 is a thinnest part of the first arc-shaped segment 1444, and a part that is of the first arc-shaped segment 1444 and that is bordered to the second arc-shaped segment 1445 is a thickest part of the first arc-shaped segment 1444.

A cross-sectional area of at least a section of the second arc-shaped segment 1445 smoothly decreases along the transmission direction of the second optical signal. In this implementation, a cross-sectional area of an overall section of the second arc-shaped segment 1445 smoothly decreases along the transmission direction of the second optical signal, a part that is of the second arc-shaped segment 1445 and that is bordered to the first arc-shaped segment 1444 is a thickest part of the second arc-shaped segment 1445, and the light output end 160 at the back end of the second arc-shaped segment 1445 is a thinnest part of the second arc-shaped segment 1445.

The first optical splitting branch waveguide 1443 described in this implementation is of a thin-thick-thin structure. When the second optical signal is transmitted in a bent waveguide in the first optical splitting branch waveguide 1443, center deviation occurs due to reflection effect of the arc-shaped waveguide, and a center of the second optical signal deviates from a center of the first optical splitting branch waveguide 1443. In addition, as a quantity of reflection times increases, a deviation degree is more obvious. In this implementation, the first optical splitting branch waveguide 1443 is disposed in the thin-thick-thin structure, so that a quantity of reflection times of the second optical signal in the first optical splitting branch waveguide 1443 can be reduced. As the cross-sectional area of the first optical splitting branch waveguide 1443 increases, a center deviation degree of the second optical signal is correspondingly reduced, to improve optical splitting balance when optical splitting is performed at the back end of the second optical splitting waveguide 140.

In a possible implementation, refer to FIG. 21. The optical branching waveguide 1442 further includes a second optical splitting branch waveguide 1446, and the second optical splitting branch waveguide 1446 is located between the two first optical splitting branch waveguides 1443.

The second optical splitting branch waveguide 1446 may be in a straight-line shape as a whole, or a section that is of the second optical splitting branch waveguide 1446 and that is coupled to the second transition waveguide 1441 is in a straight-line shape, and a section at the back end is a nonlinear waveguide such as an arc-shaped waveguide or a staggered waveguide.

At least a part of the second optical splitting branch waveguides 1446 is in a straight-line shape, and the second optical splitting branch waveguide 1446 in the straight-line shape is located between the arc-shaped first optical splitting branch waveguides 1443, which is similar to the case for the first optical splitting waveguide 130 and the second optical splitting waveguides 140. This can effectively reduce an energy loss of the second optical signal during optical splitting.

This application further provides an optical splitter chip. Refer to FIG. 7 to FIG. 9. The optical splitter chip includes the optical splitter 100 according to any one of the foregoing implementations. The first optical splitting waveguide 130 and the second optical splitting waveguide 140 in the optical splitter 100 are coplanar, and the plurality of second optical splitting waveguides 140 are divided into two parts and located on two sides of the first optical splitting waveguide 130. The optical splitter chip further includes the substrate 150. The substrate 150 may be made of a quartz material.

The optical input waveguide 110, the first transition waveguide 120, and the branch waveguide are waveguide paths formed in the substrate 150 by using an etching process. Specifically, cross sections of the optical input waveguide 110, the first transition waveguide 120, and the branch waveguide in this implementation are all squares, the optical input waveguide 110, the first transition waveguide 120, and the branch waveguide are all located in the substrate 150, the optical input waveguide 110 forms the light inlet (not shown in the figure) on one side of the substrate 150, and the branch waveguide forms the plurality of light output ends 160 on the other side of the substrate 150 (refer to FIG. 9).

A quantity N1 of the second optical splitting waveguides 140 is an even number, and may be 2, 4, 6, 8, or the like. When N1 is 2, refer to FIG. 8. Two second optical splitting waveguides 140 are respectively the second optical splitting waveguide 140a and the second optical splitting waveguide 140b, and the second optical splitting waveguide 140a and the second optical splitting waveguide 140b are respectively located on two sides of the first optical splitting waveguide 130.

When N1 is 4, refer to FIG. 10. Four second optical splitting waveguides 140 are respectively the second optical splitting waveguide 140a, the second optical splitting waveguide 140b, the second optical splitting waveguide 140c, and the second optical splitting waveguide 140d. The four second optical splitting waveguides 140 may be evenly divided into two parts, the second optical splitting waveguide 140a and the second optical splitting waveguide 140c are located on one side of the first optical splitting waveguide 130, and the second optical splitting waveguide 140b and the second optical splitting waveguide 140d are located on the other side of the first optical splitting waveguide 130. Specifically, the energy proportion of the first optical splitting waveguide 130 is the highest, and may be approximately 60%; energy proportions of the second optical splitting waveguide 140a and the second optical splitting waveguide 140b are lower, and may be approximately 12.5% respectively; and energy proportions of the second optical splitting waveguide 140c and the second optical splitting waveguide 140d are the lowest, and may be approximately 7.5% respectively. For the second optical splitting waveguides 140 on both sides of the first optical splitting waveguide 130, the energy proportion of the second optical splitting waveguide 140 gradually decreases along the direction away from the first optical splitting waveguide 130.

As described above, when N1 is an even number such as 8 or 10, the second optical splitting waveguides 140 may be evenly divided into two parts, and the first optical splitting waveguide 130 is located between the two parts of the evenly divided second optical splitting waveguides 140, so that the optical splitting distance L1 that is of the first optical splitting waveguide 130 and that is at the optical splitting plane 121 is less than the optical splitting distance L2 of the second optical splitting waveguide 140. This reduces an optical loss of optical splitting performed on the optical signal at the optical splitting plane 121.

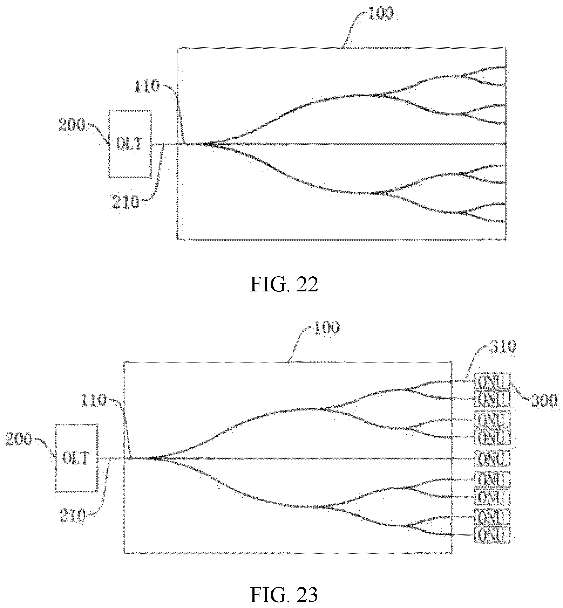

This application further provides a communication device. Refer to FIG. 22. The communication device includes the optical splitter 100 according to any one of the foregoing implementations, and further includes an optical line terminal 200. The optical line terminal 200 is connected to the optical input waveguide 110 of the optical splitter 100 through a trunk fiber 210, and the optical line terminal 200 is configured to input an optical signal to the optical input waveguide 110.

The optical line terminal 200 and the optical splitter 100 may be integrated into one device, and optical signal connection is implemented inside the device through the trunk fiber 210. A plurality of output ports of the optical splitter 100 are configured to connect to the optical network unit 300, to implement optical signal transmission and distribution.

This application further provides an optical distribution network. Refer to FIG. 23. The optical distribution network includes the optical splitter 100 according to any one of the foregoing implementations, and further includes an optical line terminal 200 and a plurality of optical network units 300. The optical line terminal 200 is coupled to the optical input waveguide 110 of the optical splitter 100 through the trunk fiber 210. The optical line terminal 200 is configured to input an optical signal to the optical input waveguide 110. The plurality of optical network units 300 are coupled to output ports of the optical splitter 100 in a one-to-one manner through branch fibers 310.

An optical splitter is a passive device for FTTH access. It is generally used by operators in the communication industry to branch broadband on a home broadband side. Specifically, the optical splitter may be used in a passive optical network (passive optical network, PON) system, and the system generally includes an optical line terminal (optical Line Terminal, OLT), an optical distribution network (optical distribution network, ODN), and an optical network unit (optical network unit, ONU). The ODN provides an optical transmission physical channel between the OLT and the ONU. The PON system in this embodiment of this application may be a next-generation PON (next-generation PON, NGPON), an NG-PON1, an NG-PON2, a gigabit-capable PON (gigabit-capable PON, GPON), a 10 gigabit per second PON (10 gigabit per second PON, XG-PON), a 10-gigabit-capable symmetric passive optical network (10-gigabit-capable symmetric passive optical network, XGS-PON), an Ethernet PON (Ethernet PON, EPON), a 10 gigabit EPON (10 gigabit per second EPON, 10G-EPON), a next-generation EPON (next-generation EPON, NG-EPON), wavelength-division multiplexing (wavelength-division multiplexing, WDM) PON, time and wavelength-division multiplexing (time and wavelength-division multiplexing, TWDM) PON, point-to-point (point-to-point, P2P) WDM PON (P2P-WDM PON), an asynchronous transfer mode PON (asynchronous transfer mode PON, APON), a broadband PON (broadband PON, BPON), or the like, and 25 gigabit per second PON (25 gigabit per second PON, 25G-PON), 50 gigabit per second PON (50 gigabit per second PON, 50G-PON), 100 gigabit per second PON (100 gigabit per second PON, 100G-PON), 25 gigabit per second EPON (25 gigabit per second EPON, 25G-EPON), 50 gigabit per second EPON (50 gigabit per second EPON, 50G-EPON), 100 gigabit per second EPON (100 gigabit per second EPON, 100G-EPON), and various other PON systems specified by ITU, or various other PON systems specified by IEEE.

In the PON system, a direction from the OLT to the ONU is defined as a downlink direction, and a direction from the ONU to the OLT is defined as an uplink direction. The OLT is a core component of an optical access network, and is usually located in a central office (Central Office, CO), and may manage at least one ONU in a unified manner. The OLT is configured to provide data for each accessed ONU, provide management, and the like. The OLT may be configured to send an optical signal to each ONU, receive information fed back by each ONU, and process the information fed back by the ONU, other data, or the like. The ONU is configured to receive data sent by the OLT, respond to a management command of the OLT, cache Ethernet data of a user, send data in the uplink direction in a transmit window allocated by the OLT, and so on.

The ODN generally includes an optical distribution frame (Optical Distribution Frame, ODF), a fiber splice closure (also referred to as a splitting and splicing closure (splitting and splicing closure, SSC)), a fiber optical distribution box (also referred to as a fiber distribution terminal (FDT)), a fiber splitter box (also referred to as a fiber access terminal (fiber access terminal, FAT)), a fiber terminal closure (also referred to as an access terminal box (access terminal box, ATB)), and the like. The FDT may include an optical splitter A, and the FAT may include an optical splitter B. An optical signal from the OLT is sequentially split by the ODF, the SSC, the optical splitter A in the FDT, and the optical splitter B in the FAT, and reaches the ONU through the ATB. In other words, the optical signal from the OLT is transmitted to the ONU through an optical link between the OLT and the ONU. The optical splitter A equally divides power of a received optical signal, and one of the optical signal is transmitted to the optical splitter B through one branch. Then, the optical splitter B equally divides power of the received optical signal, and the optical signal is separately transmitted to the connected ONU through each branch. An output end of a last-level optical splitter in the ODN is used as an output port of the ODN, and the ONU is connected to the output port of the ODN.

In a possible implementation, there are a plurality of optical splitters 100 in the optical distribution network, a part of the plurality of optical splitters 100 are level-1 optical splitters, another part of the plurality of optical splitters 100 are level-2 optical splitters, an input port of the level-2 optical splitter is connected to an output port of the level-1 optical splitter, and the output port is an output port of the first optical splitting waveguide and/or an output port of the second optical splitting waveguide.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments.

## Claims

1. An optical splitter (100), comprising an optical input waveguide (110) and an optical splitting waveguide, wherein the optical input waveguide (110) is configured to receive an optical signal;
the optical splitting waveguide comprises a first optical splitting waveguide (130) and a plurality of second optical splitting waveguides (140);
the first optical splitting waveguide (130) and the plurality of second optical splitting waveguides (140) are coplanar, and the plurality of second optical splitting waveguides (140) are divided into two parts and located on two sides of the first optical splitting waveguide (130), or the plurality of second optical splitting waveguides (140) are sequentially spaced apart along a circumferential direction of the first optical splitting waveguide (130); and
the first optical splitting waveguide (130) comprises a first connection segment (131) connected to the optical input waveguide (110), and the first connection segment (131) is in a straight-line shape,
wherein each of the plurality of second optical splitting waveguides (140) comprises a second connection segment (141) and a second transmission segment (142), the second connection segment (141) is located between a first transition waveguide (120) and the second transmission segment (142), and an optical signal sequentially flows through the second connection segment (141) and the second transmission segment (142); and
both the second connection segment (141) and the second transmission segment (142) are arc-shaped, the second connection segment bends along a transmission direction of the optical signal toward a direction away from the first optical splitting waveguide (130), and the second transmission segment (142) bends along the transmission direction of the optical signal toward a direction close to the first optical splitting waveguide (130),
**characterized in that** a cross-sectional area of at least a section of the second connection segment (141) smoothly increases along the transmission direction of the optical signal, and a cross-sectional area of at least a section of the second transmission segment (142) smoothly decreases along the transmission direction of the optical signal.

2. The optical splitter (100) according to claim 1, wherein a cross-sectional area of the first optical splitting waveguide (130) is greater than a cross-sectional area of each of the plurality of second optical splitting waveguides (140).

3. The optical splitter (100) according to claim 1 or 2, wherein the second connection segment (141) and the second transmission segment (142) are tangent at a bordering position.

4. The optical splitter (100) according to claim 1 or 2, wherein each of the plurality of second optical splitting waveguides (140) further comprises a third transmission segment (143), the third transmission segment (143) is located between the second connection segment (141) and the second transmission segment (142), the third transmission segment (143) is in a straight-line shape, the third transmission segment (143) and the second connection segment (141) are tangent at a bordering position, and the third transmission segment (143) and the second transmission segment (142) are tangent at a bordering position.

5. The optical splitter (100) according to any one of claims 1 to 4, wherein each of the plurality of second optical splitting waveguides (140) further comprises an optical branching element (144), the second transmission segment (142) is cascaded with at least one optical branching element (144) at a light output end (160), and all the second optical splitting waveguides (140) in the optical splitter (100) have N2 waveguide output ports (162) in total, and N2 is an even number greater than or equal to 4.

6. The optical splitter (100) according to claim 5, wherein the optical branching element (144) comprises a second transition waveguide (1441) and a plurality of optical branching waveguides (1442), the optical signal enters the second transition waveguide (1441) and is split into a plurality of optical signals, and the plurality of optical signals enter the optical branching waveguides (1442) in a one-to-one manner.

7. The optical splitter (100) according to claim 6, wherein each of the plurality of optical branching waveguides (1442) comprises a first optical splitting branch waveguide, a quantity of first optical splitting branch waveguides is two, the first optical splitting branch waveguide comprises a first arc-shaped segment (1444) and a second arc-shaped segment (1445), the first arc-shaped segment (1444) bends along a transmission direction of the optical signal toward a direction away from the other first optical splitting branch waveguide, and the second arc-shaped segment (1445) bends along the transmission direction of the optical signal toward a direction close to the other first optical splitting branch waveguide.

8. The optical splitter (100) according to claim 7, wherein a cross-sectional area of at least a section of the first arc-shaped segment (1444) smoothly increases along the transmission direction of the optical signal, and a cross-sectional area of at least a section of the second arc-shaped segment (1445) smoothly decreases along the transmission direction of the optical signal.

9. The optical splitter (100) according to any one of claims 7 to 8, wherein each of the plurality of optical branching waveguides (1442) further comprises a second optical splitting branch waveguide, the second optical splitting branch waveguide is located between the two first optical splitting branch waveguides, and a section that is of the second optical splitting branch waveguide and that is connected to the second transition waveguide (1441) is in a straight-line shape.

10. The optical splitter (100) according to any one of claims 1 to 9, wherein the optical splitter (100) further comprises the first transition waveguide (120), the first transition waveguide (120) is located between the optical input waveguide (110) and the optical splitting waveguide, the optical signal is transmitted from the optical input waveguide (110) into the first transition waveguide (120), and is split into a first optical signal and a plurality of second optical signals in the first transition waveguide (120), the first optical signal enters the first optical splitting waveguide (130), the plurality of second optical signals enter the second optical splitting waveguides (140) in a one-to-one manner, and an energy value of the first optical signal is greater than an energy value of each second optical signal.

11. The optical splitter (100) according to any one of claims 1 to 9, wherein the optical splitter (100) further comprises a substrate (150), the first optical splitting waveguide (130) and the plurality of second optical splitting waveguides (140) are both located in the substrate (150), and the first optical splitting waveguide (130) and the plurality of second optical splitting waveguides (140) are coplanar.

12. The optical splitter (100) according to claim 11, wherein a quantity of the plurality of second optical splitting waveguides (140) is an even number, the plurality of second optical splitting waveguides (140) are evenly divided into two parts, the two parts of the second optical splitting waveguides (140) are mirror-symmetric to each other, and at least a section that is of the first optical splitting waveguide (130) and that comprises a light input end overlaps with a mirror axis of the second optical splitting waveguides (140).

13. The optical splitter (100) according to any one of claims 1 to 9, wherein the plurality of second optical splitting waveguides (140) are sequentially and evenly spaced apart along the circumferential direction of the first optical splitting waveguide (130), and a central axis of the second optical splitting waveguides (140) overlaps with at least a section that is of the first optical splitting waveguide (130) and that comprises a light input end.

## Patentansprüche

1. Optischer Splitter (100), umfassend einen optischen Eingangswellenleiter (110) und einen optischen Teilungswellenleiter, wobei der optische Eingangswellenleiter (110) zum Empfang eines optischen Signals konfiguriert ist;
der optische Teilungswellenleiter einen ersten optischen Teilungswellenleiter (130) und eine Vielzahl von zweiten optischen Teilungswellenleitern (140) umfasst;
der erste optische Teilungswellenleiter (130) und die Vielzahl von zweiten optischen Teilungswellenleitern (140) koplanar sind und die Vielzahl von zweiten optischen Teilungswellenleitern (140) in zwei Teile aufgeteilt ist und sich auf zwei Seiten des ersten optischen Teilungswellenleiters (130) befindet oder die Vielzahl zweiter optischer Teilungswellenleiter (140) entlang einer Umfangsrichtung des ersten optischen Teilungswellenleiters (130) sequentiell voneinander beabstandet ist; und
der erste optische Teilungswellenleiter (130) ein erstes Verbindungssegment (131) umfasst, das mit dem optischen Eingangswellenleiter (110) verbunden ist, und das erste Verbindungssegment (131) in einer geradlinigen Form vorliegt,
wobei jeder der Vielzahl von zweiten optischen Teilungswellenleitern (140) ein zweites Verbindungssegment (141) und ein zweites Übertragungssegment (142) umfasst, sich das zweite Verbindungssegment (141) zwischen einem ersten Übergangswellenleiter (120) und dem zweiten Übertragungssegment (142) befindet und ein optisches Signal sequentiell durch das zweite Verbindungssegment (141) und das zweite Übertragungssegment (142) fließt; und
sowohl das zweite Verbindungssegment (141) als auch das zweite Übertragungssegment (142) bogenförmig sind, das zweite Verbindungssegment sich entlang einer Übertragungsrichtung des optischen Signals zu einer Richtung weg von dem ersten optischen Teilungswellenleiter (130) hin biegt und das zweite Übertragungssegment (142) sich entlang der Übertragungsrichtung des optischen Signals zu einer Richtung nahe an dem ersten optischen Teilungswellenleiter (130) hin biegt,
**dadurch gekennzeichnet, dass** eine Querschnittsfläche mindestens eines Abschnitts des zweiten Verbindungssegments (141) entlang der Übertragungsrichtung des optischen Signals gleichmäßig zunimmt und eine Querschnittsfläche mindestens eines Abschnitts des zweiten Übertragungssegments (142) entlang der Übertragungsrichtung des optischen Signals gleichmäßig abnimmt.

2. Optischer Splitter (100) nach Anspruch 1, wobei eine Querschnittsfläche des ersten optischen Teilungswellenleiters (130) größer als eine Querschnittsfläche jeder aus der Vielzahl von zweiten optischen Teilungswellenleitern (140) ist.

3. Optischer Splitter (100) nach Anspruch 1 oder 2, wobei sich das zweite Verbindungssegment (141) und das zweite Übertragungssegment (142) an einer Angrenzposition berühren.

4. Optischer Splitter (100) nach Anspruch 1 oder 2, wobei jede aus der Vielzahl von zweiten optischen Teilungswellenleitern (140) ferner ein drittes Übertragungssegment (143) umfasst, das dritte Übertragungssegment (143) sich zwischen dem zweiten Verbindungssegment (141) und dem zweiten Übertragungssegment (142) befindet, das dritte Übertragungssegment (143) in einer geradlinigen Form vorliegt, das dritte Übertragungssegment (143) und das zweite Verbindungssegment (141) sich an einer Angrenzposition berühren und sich das dritte Übertragungssegment (143) und das zweite Übertragungssegment (142) an einer Angrenzposition berühren.

5. Optischer Splitter (100) nach einem der Ansprüche 1 bis 4, wobei jeder aus der Vielzahl von zweiten optischen Teilungswellenleitern (140) ferner ein optisches Verzweigungselement (144) umfasst, das zweite Übertragungssegment (142) an einem Lichtausgangsende (160) mit mindestens einem optischen Verzweigungselement (144) kaskadiert ist und alle zweiten optischen Teilungswellenleiter (140) in dem optischen Splitter (100) insgesamt N2 Wellenleiter-Ausgangsanschlüsse (162) aufweisen und N2 eine gerade Zahl größer oder gleich 4 ist.

6. Optischer Splitter (100) nach Anspruch 5, wobei das optische Verzweigungselement (144) einen zweiten Übergangswellenleiter (1441) und eine Vielzahl von optischen Verzweigungswellenleitern (1442) umfasst, das optische Signal in den zweiten Übergangswellenleiter (1441) eintritt und in eine Vielzahl von optischen Signalen geteilt wird und die Vielzahl von optischen Signalen eins zu eins in die optischen Verzweigungswellenleiter (1442) eintritt.

7. Optischer Splitter (100) nach Anspruch 6, wobei jede der Vielzahl von optischen Verzweigungswellenleitern (1442) einen ersten optischen Teilungszweigwellenleiter umfasst, eine Menge der ersten optischen Teilungszweigwellenleiter zwei beträgt, der erste optische Teilungszweigwellenleiter ein erstes bogenförmiges Segment (1444) und ein zweites bogenförmiges Segment (1445) umfasst, das erste bogenförmige Segment (1444) sich entlang einer Übertragungsrichtung des optischen Signals zu einer Richtung weg von dem anderen ersten optischen Teilungszweigwellenleiter hin biegt und das zweite bogenförmige Segment (1445) sich entlang der Übertragungsrichtung des optischen Signals zu einer Richtung nahe an dem anderen ersten optischen Teilungszweigwellenleiter hin biegt.

8. Optischer Splitter (100) nach Anspruch 7, wobei eine Querschnittsfläche mindestens eines Abschnitts des ersten bogenförmigen Segments (1444) entlang der Übertragungsrichtung des optischen Signals gleichmäßig zunimmt und eine Querschnittsfläche mindestens eines Abschnitts des zweiten bogenförmigen Segments (1445) entlang der Übertragungsrichtung des optischen Signals gleichmäßig abnimmt.

9. Optischer Splitter (100) nach einem der Ansprüche 7 bis 8, wobei jeder der Vielzahl von optischen Verzweigungswellenleitern (1442) ferner einen zweiten optischen Teilungszweigwellenleiter umfasst, der zweite optische Teilungszweigwellenleiter sich zwischen den zwei ersten optischen Teilungszweigwellenleitern befindet und ein Abschnitt, der zu dem zweiten optischen Teilungszweigwellenleiter gehört und der mit dem zweiten Übergangswellenleiter (1441) verbunden ist, in einer geradlinigen Form vorliegt.

10. Optischer Splitter (100) nach einem der Ansprüche 1 bis 9, wobei der optische Splitter (100) ferner den ersten Übergangswellenleiter (120) umfasst, der erste Übergangswellenleiter (120) sich zwischen dem optischen Eingangswellenleiter (110) und dem optischen Teilungswellenleiter befindet, das optische Signal von dem optischen Eingangswellenleiter (110) in den ersten Übergangswellenleiter (120) übertragen wird und in dem ersten Übergangswellenleiter (120) in ein erstes optisches Signal und eine Vielzahl von zweiten optischen Signalen geteilt wird, das erste optische Signal in den ersten optischen Teilungswellenleiter (130) eintritt, die Vielzahl von zweiten optischen Signalen eins zu eins in die zweiten optischen Teilungswellenleiter (140) eintritt und ein Energiewert des ersten optischen Signals größer als ein Energiewert jedes zweiten optischen Signals ist.

11. Optischer Splitter (100) nach einem der Ansprüche 1 bis 9, wobei der optische Splitter (100) ferner ein Substrat (150) umfasst, der erste optische Teilungswellenleiter (130) und die Vielzahl von zweiten optischen Teilungswellenleitern (140) sich beide in dem Substrat (150) befinden und der erste optische Teilungswellenleiter (130) und die Vielzahl von zweiten optischen Teilungswellenleitern (140) koplanar sind.

12. Optischer Splitter (100) nach Anspruch 11, wobei eine Menge der Vielzahl von zweiten optischen Teilungswellenleitern (140) eine gerade Zahl ist, die Vielzahl von zweiten optischen Teilungswellenleitern (140) gleich in zwei Teile aufgeteilt ist, die zwei Teile der zweiten optischen Teilungswellenleiter (140) zueinander spiegelsymmetrisch sind und mindestens ein Abschnitt, der zu dem ersten optischen Teilungswellenleiter (130) gehört und der ein Lichteingangsende umfasst, mit einer Spiegelachse der zweiten optischen Teilungswellenleiter (140) überlappt.

13. Optischer Splitter (100) nach einem der Ansprüche 1 bis 9, wobei die Vielzahl von zweiten optischen Teilungswellenleitern (140) sequentiell und gleich entlang der Umfangsrichtung des ersten optischen Teilungswellenleiters (130) beabstandet ist und eine Mittelachse der zweiten optischen Teilungswellenleiter (140) mit mindestens einem Abschnitt, der zu dem ersten optischen Teilungswellenleiter (130) gehört und der ein Lichteingangsende umfasst, überlappt.

## Revendications

1. Diviseur optique (100), comprenant un guide d'ondes d'entrée optique (110) et un guide d'ondes de division optique, dans lequel le guide d'ondes d'entrée optique (110) est configuré pour recevoir un signal optique ;
le guide d'ondes de division optique comprend un premier guide d'ondes à division optique (130) et une pluralité de seconds guides d'ondes de division optique (140) ;
le premier guide d'ondes de division optique (130) et la pluralité de seconds guides d'ondes de division optique (140) sont coplanaires, et la pluralité de seconds guides d'ondes de division optique (140) sont divisés en deux parties et situés sur deux côtés du premier guide d'ondes de division optique (130), ou la pluralité de seconds guides d'ondes de division optique (140) sont espacés séquentiellement le long d'une direction circonférentielle du premier guide d'ondes de division optique (130) ; et
le premier guide d'ondes de division optique (130) comprend un premier segment de connexion (131) connecté au guide d'ondes d'entrée optique (110), et le premier segment de connexion (131) est de forme rectiligne,
dans lequel chacun de la pluralité de seconds guides d'ondes de division optique (140) comprend un second segment de connexion (141) et un deuxième segment de transmission (142), le second segment de connexion (141) est situé entre un premier guide d'ondes de transition (120) et le deuxième segment de transmission (142), et un signal optique circule séquentiellement à travers le second segment de connexion (141) et le deuxième segment de transmission (142) ; et
le second segment de connexion (141) et le deuxième segment de transmission (142) sont tous deux en forme d'arc, le second segment de connexion se courbe le long d'une direction de transmission du signal optique vers une direction éloignée du premier guide d'ondes de division optique (130), et le deuxième segment de transmission (142) se courbe le long de la direction de transmission du signal optique vers une direction proche du premier guide d'ondes de division optique (130),
**caractérisé en ce qu'**une surface de section transversale d'au moins une section du second segment de connexion (141) augmente progressivement le long de la direction de transmission du signal optique, et qu'une surface de section transversale d'au moins une section du deuxième segment de transmission (142) diminue progressivement le long de la direction de transmission du signal optique.

2. Diviseur optique (100) selon la revendication 1, dans lequel une surface de section transversale du premier guide d'ondes de division optique (130) est supérieure à une surface de section transversale de chacun de la pluralité de guides d'ondes de division optique (140).

3. Diviseur optique (100) selon la revendication 1 ou 2, dans lequel le second segment de connexion (141) et le deuxième segment de transmission (142) sont tangents au niveau d'une position limite.

4. Diviseur optique (100) selon la revendication 1 ou 2, dans lequel chacun de la pluralité de seconds guides d'ondes de division optique (140) comprend en outre un troisième segment de transmission (143), le troisième segment de transmission (143) est situé entre le second segment de connexion (141) et le deuxième segment de transmission (142), le troisième segment de transmission (143) est de forme rectiligne, le troisième segment de transmission (143) et le second segment de connexion (141) sont tangents au niveau d'une position limite, et le troisième segment de transmission (143) et le deuxième segment de transmission (142) sont tangents au niveau d'une position limite.

5. Diviseur optique (100) selon l'une quelconque des revendications 1 à 4, dans lequel chacun de la pluralité de seconds guides d'ondes de division optique (140) comprend en outre un élément de branchement optique (144), le deuxième segment de transmission (142) est en cascade avec au moins un élément de branchement optique (144) au niveau d'une extrémité de sortie de lumière (160), et tous les seconds guides d'ondes de division optique (140) dans le diviseur optique (100) ont au total N2 ports de sortie de guide d'ondes (162), et N2 est un nombre pair supérieur ou égal à 4.

6. Diviseur optique (100) selon la revendication 5, dans lequel l'élément de branchement optique (144) comprend un second guide d'ondes de transition (1441) et une pluralité de guides d'ondes de branchement optique (1442), le signal optique entre dans le second guide d'ondes de transition (1441) et est divisé en une pluralité de signaux optiques, et la pluralité de signaux optiques entrent dans les guides d'ondes de branchement optique (1442) de manière un à un.

7. Diviseur optique (100) selon la revendication 6, dans lequel chacun de la pluralité de guides d'ondes de branchement optique (1442) comprend un premier guide d'ondes de branche de division optique, une quantité de premiers guides d'ondes de branche de division optique est de deux, le premier guide d'ondes de branche de division optique comprend un premier segment en forme d'arc (1444) et un second segment en forme d'arc (1445), le premier segment en forme d'arc (1444) se courbe le long d'une direction de transmission du signal optique vers une direction éloignée de l'autre premier guide d'ondes de branche de division optique, et le second segment en forme d'arc (1445) se courbe le long de la direction de transmission du signal optique vers une direction proche de l'autre premier guide d'ondes de branche de division optique.

8. Diviseur optique (100) selon la revendication 7, dans lequel une surface de section transversale d'au moins une section du premier segment en forme d'arc (1444) augmente progressivement le long de la direction de transmission du signal optique, et une surface de section transversale d'au moins une section du second segment en forme d'arc (1445) diminue progressivement le long de la direction de transmission du signal optique.

9. Diviseur optique (100) selon l'une quelconque des revendications 7 et 8, dans lequel chacun de la pluralité de guides d'ondes de branchement optique (1442) comprend en outre un second guide d'ondes de branche de division optique, le second guide d'ondes de branche de division optique est situé entre les deux premiers guides d'ondes de branche de division optique, et une section qui est du second guide d'ondes de branche de division optique et qui est connectée au second guide d'ondes de transition (1441) est de forme rectiligne.

10. Diviseur optique (100) selon l'une quelconque des revendications 1 à 9, dans lequel le diviseur optique (100) comprend en outre le premier guide d'ondes de transition (120), le premier guide d'ondes de transition (120) est situé entre le guide d'ondes d'entrée optique (110) et le guide d'ondes de division optique, le signal optique est transmis depuis le guide d'ondes d'entrée optique (110) jusque dans le premier guide d'ondes de transition (120), et est divisé en un premier signal optique et une pluralité de seconds signaux optiques dans le premier guide d'ondes de transition (120), le premier signal optique entre dans le premier guide d'ondes de division optique (130), la pluralité de seconds signaux optiques entrent dans les seconds guides d'ondes de division optique (140) de manière un à un, et une valeur d'énergie du premier signal optique est supérieure à une valeur d'énergie de chaque second signal optique.

11. Diviseur optique (100) selon l'une quelconque des revendications 1 à 9, dans lequel le diviseur optique (100) comprend en outre un substrat (150), le premier guide d'ondes de division optique (130) et la pluralité de seconds guides d'ondes de division optique (140) sont tous deux situés dans le substrat (150), et le premier guide d'ondes de division optique (130) et la pluralité de seconds guides d'ondes de division optique (140) sont coplanaires.

12. Diviseur optique (100) selon la revendication 11, dans lequel une quantité de la pluralité de seconds guides d'ondes de division optique (140) est un nombre pair, la pluralité de seconds guides d'ondes de division optique (140) est divisée uniformément en deux parties, les deux parties des seconds guides d'ondes de division optique (140) sont symétriques en miroir l'une par rapport à l'autre, et au moins une section qui est du premier guide d'ondes de division optique (130) et qui comprend une extrémité d'entrée de lumière chevauche un axe de miroir des seconds guides d'ondes de division optique (140).

13. Diviseur optique (100) selon l'une quelconque des revendications 1 à 9, dans lequel la pluralité de seconds guides d'ondes de division optique (140) sont espacés séquentiellement et uniformément le long de la direction circonférentielle du premier guide d'ondes de division optique (130), et un axe central des seconds guides d'ondes de division optique (140) chevauche au moins une section qui est du premier guide d'ondes de division optique (130) et qui comprend une extrémité d'entrée de lumière.
